**Europäisches Patentamt**

**European Patent Office**

**Office européen des brevets**

(11) Numéro de publication : **0 473 486 B1**

## (12) FASCICULE DE BREVET EUROPEEN

(45) Date de publication du fascicule du brevet :
**08.06.94 Bulletin 94/23**

(51) Int. Cl.⁵ : **B01D 65/02,** B01D 61/22,
B01D 29/11, B01D 29/60,
B01D 29/66, B01D 37/04,
C02F 1/00

(21) Numéro de dépôt : **91402203.3**

(22) Date de dépôt : **07.08.91**

(54) **Procédé de commande des modes de fonctionnement d'un appareil automatique de filtration d'eau sur membranes tubulaires.**

(30) Priorité : **31.08.90 FR 9010864**

(43) Date de publication de la demande :
**04.03.92 Bulletin 92/10**

(45) Mention de la délivrance du brevet :
**08.06.94 Bulletin 94/23**

(84) Etats contractants désignés :
**AT DE ES GB IT**

(56) Documents cités :
**EP-A- 0 122 867
EP-A- 0 335 647
FR-A- 2 586 202
FR-A- 2 609 645
US-A- 4 592 848
PATENT ABSTRACTS OF JAPAN vol. 7, no.
285 (C-201)(1430) 20 Décembre 1983 & JP-A-58
163 406 ( NITTO DENKI ) 28 Septembre 1983
PATENT ABSTRACTS OF JAPAN vol. 14, no.
350 (C-744)(4293) 27 Juillet 1990 & JP-A-2 126
923 ( TOSHIBA CORP ) 15 Mai 1990**

(73) Titulaire : **LYONNAISE DES EAUX - DUMEZ
72, Avenue de la Liberté
F-92000 Nanterre (FR)**
Titulaire : **DEGREMONT S.A.
183, Avenue du 18 Juin 1940
F-92508 Rueil-Malmaison Cédex (FR)**

(72) Inventeur : **Anselme, Christophe
16, rue du Petit Montesson
F-78110 Le Vesinet (FR)**
Inventeur : **Daniel, Loic
14, rue d'Estienne d'Orves
F-92500 Rueil Malmaison (FR)**

(74) Mandataire : **Cournarie, Michèle et al
Office Blétry
2, boulevard de Strasbourg
F-75010 Paris (FR)**

EP 0 473 486 B1

## Description

L'invention concerne un procédé de commande des modes de fonctionnement d'un appareil automatique de filtration d'eau sur membranes tubulaires.

Le traitement de l'eau par filtration sur membranes tubulaires en vue de sa distribution dans le réseau public d'eau potable présente un intérêt particulier pour des installations traitant des débits faibles à moyens. De telles installations doivent pouvoir fonctionner de façon automatique, et fournir une quantité et une qualité constantes d'eau filtrée quelles que soient les variations de la qualité de la ressource, bien qu'elles soient mises à la disposition de communes qui ne disposent pas de moyens financiers suffisants pour assurer leur surveillance continue par du personnel qualifié.

A l'heure actuelle, on connaît et on utilise trois modes de filtration pour les membranes tubulaires à peau interne:

- la filtration frontale, où la totalité de l'eau introduite dans les membranes traverse la membrane et est recueillie en tant que perméat (eau filtrée) à la périphérie du faisceau de membranes, le débit à la sortie des membranes étant nul et le nettoyage des membranes étant assuré, quand l'épaisseur de la couche de matières en suspension arrêtées par la membrane et déposées sur celle-ci provoque une augmentation de la perte de charge qui, à débit constant, augmente la pression au-dessus d'un seuil admissible, par des rétrolavages périodiques destinés à éliminer cette couche de matières déposées, et déclenchés par un automate de gestion (ou commande),
- la filtration tangentielle, où une partie seulement de l'eau introduite dans les membranes traverse la membrane et est recueillie en tant que permeat, tandis que l'autre partie recueillie à la sortie des membranes est recirculée dans une boucle, le nettoyage des membranes étant assuré d'une part en continu par la circulation de l'eau dans les membranes qui permet de maintenir en suspension dans le courant une partie des matières en suspension, au lieu qu'elles ne se déposent sur les membranes, donc de limiter l'épaisseur du gâteau, et d'autre part par des rétrolavages périodiques, et
- la filtration tangentielle avec purge continue reprenant le principe de la filtration tangentielle décrite ci-dessus où on purge une partie de l'eau d'alimentation de façon à limiter la concentration des matières en suspension dans le circuit.

C'est le mode de filtration frontale qui est le plus économique au point de vue énergétique car il ne nécessite qu'une pompe d'alimentation dont le débit est égal au débit d'eau filtrée produite. La filtration tangentielle exige une pompe supplémentaire pour la recirculation; l'adjonction d'une purge continue dont l'eau est renvoyée à son lieu de prélèvement ou à l'égoût est évidemment encore moins économique.

En cas d'augmentation de la turbidité ou de la charge en matières organiques de l'eau d'alimentation au-delà du seuil permettant le bon fonctionnement en mode frontal, il faudrait pouvoir passer au mode de filtration tangentielle et si la qualité de l'eau se détériore encore, il serait nécessaire de pouvoir procéder à une purge continue. Inversement en cas de restauration de la qualité de l'eau à filtrer, il serait intéressant de revenir à un mode de fonctionnement plus économique.

A l'heure actuelle, ces trois modes de fonctionnement peuvent être mis en oeuvre conjointement dans une même installation, le passage du mode frontal au mode tangentiel se faisant par mise en route de la pompe de recirculation et l'adjonction de la purge se faisant par ouverture de la vanne appropriée. La décision de la modification est alors faite par la personne chargée de la surveillance en fonction de la qualité de l'eau filtrée.

Il serait donc intéressant de prévoir une automatisation du passage d'un mode à un autre, ne nécessitant pas d'intervention humaine

L'invention fournit donc un procédé de commande des modes de fonctionnement d'un appareil comprenant des modules de membranes tubulaires de filtration d'eau à peau interne, les modes de filtration possibles étant la filtration frontale, la filtration tangentielle avec recirculation dans une boucle et la filtration tangentielle avec purge continue, caractérisé en ce que l'on prévoit deux types de déclenchement des rétrolavages des membranes de filtration, le premier étant lié à des laps de temps, prédéterminés pour chaque mode de filtration, entre deux rétrolavages et le second étant lié à des valeurs de consigne, prédéterminées pour chaque mode de filtration, d'un paramètre de fonctionnement de l'appareil automatique, paramètre qui est lié à la qualité de l'eau à traiter ; et on passe d'un mode de filtration à un autre après qu'au moins un rétrolavage a été déclenché par atteinte d'une des valeurs de consigne au lieu de l'être au bout d'un laps de temps prédéterminé, le passage se faisant dans l'ordre : filtration frontale, filtration tangentielle, filtration tangentielle avec purge continue, ou dans l'ordre inverse si deux ou plusieurs rétrolavages consécutifs ont été déclenchés au bout d'un laps de temps prédéterminé au lieu de l'être par atteinte d'une valeur de consigne.

Lorsqu'au moins un rétrolavage est déclenché, en mode frontal, par atteinte d'une première valeur de consigne d'un paramètre de fonctionnement de l'appareil au lieu de l'être au bout d'un premier laps de temps prédéterminé, on passe automatiquement au mode tangentiel par mise en service de la boucle de recirculation, et lorsqu'au moins un rétrolavage est déclenché, en mode tangentiel, par atteinte d'une deuxième valeur de consigne au lieu de l'être au bout d'un deuxième laps de temps prédéterminé, on passe automatiquement au mode tangentiel avec purge par ouverture d'une vanne de purge sur la boucle de recirculation.

Il est intéressant, au moins dans le cas du passage à la purge continue, de ne pas le faire au premier rétrolavage lié à la valeur de consigne mais de ne le faire que lorsque deux rétrolavages liés à la valeur de consigne ont été déclenchés dans un troisième temps prédéterminé inférieur au deuxième temps prédéterminé. Inversement si l'automate de gestion constate qu'en filtration tangentielle avec purge continue, deux ou plusieurs rétrolavages consécutifs sont déclenchés non plus par la valeur de consigne mais au bout du deuxième laps de temps prédéterminé, on repasse alors au mode de filtration tangentielle simple par fermeture de la vanne de purge.

Un tel retour au mode de fonctionnement précédent peut être prévu entre le mode tangentiel et le mode frontal, lorsque l'automate constate par exemple que deux ou plusieurs lavages consécutifs sont déclenchés au bout du deuxième laps de temps prédéterminé lorsque celui-ci est au moins égal au premier laps de temps prédéterminé.

Le paramètre de fonctionnement de l'automate choisi pour attribuer les valeurs de consigne doit être lié à la qualité de l'eau à traiter. On peut citer à titre d'exemples la turbidité due à la charge en matières en suspension et la pression transmembranaire qui augmente lorsque la charge en matières en suspension et en matières organiques augmente.

L'utilisation de la turbidité impose de déterminer, lors des essais de mise en route de l'installation, deux valeurs expérimentales qui seront choisies comme valeurs de consigne.

Toutefois le paramètre est avantageusement la pression d'entrée dans les modules de filtration. Cette pression d'entrée est en effet liée à la pression transmembranaire par la relation

$$Ptm = \frac{Pe + Ps}{2} - Pp$$

où

Ptm = pression transmembranaire
Pe = pression d'entrée dans le module
Ps = pression de sortie du module
Pp = pression du perméat (eau filtrée).

La pression transmembranaire maximum pour une membrane donnée, qui est la pression maximum à laquelle la membrane fonctionne correctement, est plus élevée en filtration tangentielle qu'en filtration frontale. La pression d'entrée maximum dans le module étant liée à la pression transmembranaire maximum par la relation

$$Pe_{max} = Ptm_{max} + \frac{\Delta P}{2} + Pp$$

où $\Delta P = Pe - Ps$ (perte de charge longitudinale),
on dispose donc de deux valeurs de consigne dont la plus faible est associée au fonctionnement au mode frontal et au passage éventuel en mode tangentiel et la plus élevée au fonctionnement en mode tangentiel et au passage éventuel en mode tangentiel avec purge.

Les dispositifs de filtration d'eau fonctionnent en discontinu, selon la demande en eau filtrée. Ils s'arrêtent lorsque le niveau d'eau dans les réservoirs (ou baches) alimentant le réseau public est élevé et se mettent en route lorsqu'il descend au-dessous d'une valeur donnée. On prévoit donc dans le cas de la filtration sur membranes de commencer lors de chaque mise en route par le mode de filtration frontale, le passage aux autres modes de filtration se faisant si la qualité de l'eau se détériore en cours de fonctionnement, en raison par exemple d'orages ou de fortes précipitations. En effet l'appareil de filtration est généralement dimensionné selon la qualité la plus fréquente de l'eau à traiter pour fonctionner en mode frontal nettement plus économique.

Le procédé de commande va maintenant être décrit plus en détail, selon un exemple illustratif et non limitatif.

Le procédé est mis en oeuvre en utilisant un ensemble de modules de membranes de filtration à peau interne, comportant une boucle de recirculation et un circuit de rétrolavage, ainsi qu'une vanne de purge continue, agencés de façon à autoriser les trois modes de fonctionnement décrits précédemment. De tels agencements sont connus de l'homme de métier, avec plusieurs variantes permettant l'alimentation des modules en eau à filtrer par le haut et/ou par le bas. Jusqu'à présent, le passage d'un mode de fonctionnement à un autre se fait par commande manuelle lorsque la qualité de l'eau filtrée laisse à désirer.

On partira de la mise en route de l'appareil après un arrêt de la ligne de production dû à une absence de demande en eau (bache pleine).

L'alimentation des membranes se fait alors à l'aide d'une pompe d'alimentation, la boucle de recirculation étant éventuellement utilisée pour le passage de l'eau à filtrer mais la pompe de recirculation est à l'arrêt.

Les rétrolavages sont déclenchés de manière classique automatiquement au bout d'un premier laps de temps prédéterminé qui varie généralement de 20 mnn à 24 h selon la qualité de l'eau à traiter. Ce premier laps de temps $t_1$ est déterminé expérimentalement à la mise en route initiale de l'installation de filtration. Toutefois et selon l'invention, il est prévu un appareil de mesure de la pression d'entrée (selon le mode de réalisation préféré) dans les membranes. Cet appareil est relié à un automate de gestion de l'appareil automatique.

Si la pression d'entrée atteint la valeur maximum $p_1$ correspondant à la pression transmembranaire maximum en mode frontal (première valeur de consigne) avant que le laps de temps $t_1$ ne se soit écoulé depuis le dernier rétrolavage, l'automate déclenche un rétrolavage et met, à la fin du rétrolavage, la boucle de recirculation en fonctionnement par mise en marche de la pompe de recirculation. La filtration se poursuit alors en mode tangentiel. Il peut être avantageux de prévoir que la mise en route de la pompe de recirculation ne se fera que lorsque deux rétrolavages consécutifs auront été déclenchés par la première valeur de consigne en un temps inférieur au laps de temps $t_1$.

Dans le mode tangentiel, les rétrolavages sont normalement déclenchés au bout d'un second laps de temps prédéterminé $t_2$ qui est généralement inférieur ou égal à $t_1$. En outre selon l'invention, lorsque la pression d'entrée maximum $p_2$ correspondant à la pression transmembranaire maximum en mode tangentiel est atteinte (deuxième valeur de consigne), l'automate déclenche un rétrolavage et ouvre éventuellement, à la fin de celui-ci, la vanne de purge. En effet, on prévoit avantageusement que l'automate n'ouvre la vanne de purge que lorsque deux rétrolavages ont été déclenchés par la deuxième valeur de consigne dans un laps de temps $t_3$ inférieur à $t_2$. Ceci pour éviter que la purge ne se mette en oeuvre à l'occasion d'une détérioration très passagère de la qualité de l'eau.

L'utilisation de la purge étant particulièrement désavantageuse au plan économique, il est souhaitable d'essayer de revenir au mode de filtration tangentielle simple. Pour cela si l'automate constate que n rétrolavages consécutifs ont été déclenchés au bout d'un temps de filtration égal à $t_2$, il ferme la vanne de purge pour revenir en mode tangentiel simple. La valeur de n est choisie par exemple de façon empirique en fonction de l'installation. Si la qualité de l'eau ne permet pas le maintien du fonctionnement en mode tangentiel simple, les rétrolavages seront déclenchés à nouveau par atteinte de la deuxième valeur de consigne, l'automate reviendra au mode de filtration avec purge.

Si les rétrolavages restent déclenchés par le laps de temps $t_2$, la filtration se poursuit en mode tangentiel.

On peut alors envisager d'essayer de revenir en mode frontal, par exemple lorsque m rétrolavages consécutifs auront été déclenchés au bout du laps de temps $t_2$ (avec $m > n$).

Les possibilités de retour au mode de fonctionnement précédent seront déterminées cas par cas selon les variations prévisibles de la qualité de l'eau à traiter, la capacité de production de l'installation, le volume de la bache réservoir, etc..., en tenant compte que à l'arrêt de la ligne de production et après un rétrolavage, l'automate remettra l'appareil en mode de filtration frontale.

On peut résumer un cycle de fonctionnement préféré selon le tableau ci-dessous.

| Rétrolavage déclenché par | Mode de filtration |
|---|---|
| $t_1$ | frontal |
| $p_1$ | frontal |
| $p_1$ (2 fois successives) | passage au mode tangentiel |
| $t_2$ | tangentiel |
| $p_2$ | tangentiel |
| $p_2$ (2 fois en moins de $t_3$) | passage au mode tangentiel avec purge |
| $p_2$ | tangentiel avec purge |
| $t_2$ (n fois) | retour au mode tangentiel simple |
| $t_2$ | tangentiel |
| $t_2$ (m fois) | retour au mode frontal (optionnel) |
| $t_1$ | frontal |

avec $m > n$

$t_3 < t_2 \leqslant t_1$

## Revendications

1. Procédé de commande des modes de fonctionnement d'un appareil de filtration d'eau comprenant des modules de membranes tubulaires de filtration d'eau à peau interne, les modes de filtration possibles étant la filtration frontale, la filtration tangentielle avec recirculation dans une boucle et la filtration tangentielle avec purge continue, caractérisé en ce que l'on prévoit deux types de déclenchement des rétrolavages des membranes de filtration, le premier étant lié à des laps de temps, prédéterminés pour chaque mode de filtration, entre deux rétrolavages et le second étant lié à des valeurs de consigne, prédéterminées pour chaque mode de filtration, d'un paramètre de fonctionnement de l'appareil automatique, paramètre qui est lié à la qualité de l'eau à traiter ; et on passe d'un mode de filtration à un autre après qu'au moins un rétrolavage a été déclenché par atteinte d'une des valeurs de consigne au lieu de l'être au bout d'un laps de temps prédéterminé, le passage se faisant dans l'ordre : filtration frontale, filtration tangentielle, filtration tangentielle avec purge continue, ou dans l'ordre inverse si deux ou plusieurs rétrolavages consécutifs ont été déclenchés au bout d'un laps de temps prédéterminé au lieu de l'être par atteinte d'une valeur de consigne.

2. Procédé selon la revendication 1, caractérisé en ce qu'on passe du mode de filtration frontale au mode de filtration tangentielle après qu'un rétrolavage a été déclenché deux fois par atteinte d'une première valeur de consigne, et on passe du mode de filtration tangentielle au mode de filtration tangentielle avec purge continue après que l'intervalle de temps entre deux rétrolavages déclenchés par atteinte d'une deuxième valeur de consigne est devenu inférieur à un laps de temps prédéterminé, lui-même inférieur aux laps de temps prédéterminés pour les premiers types de déclenchement de rétrolavage.

3. Procédé selon la revendication 2, caractérisé en ce qu'on passe du mode de filtration tangentielle avec purge au mode de filtration tangentielle lorsque n rétrolavages consécutifs ont été déclenchés au bout du laps de temps prédéterminé pour la filtration tangentielle, et on passe du mode de filtration tangen-

5

tielle au mode de filtration frontale lorsque m rétrolavages consécutifs ont été déclenchés au bout du laps de temps prédéterminé pour la filtration tangentielle, avec m>n.

4. Procédé selon l'une quelconque des revendications 1 à 3, caractérisé en ce que la ou les valeurs de consigne sont les pressions d'entrée dans les modules correspondant aux pressions transmembranaires maximum en filtration frontale et en filtration tangentielle.

5. Procédé selon l'une quelconque des revendications 1 à 4, caractérisé en ce que, après arrêt du fonctionnement des modules, on effectue un rétrolavage et on prévoit le redémarrage des modules en mode de filtration frontale.

## Patentansprüche

1. Verfahren zum Steuern der Betriebsarten einer Vorrichtung zur Wasserfiltration mit rohrförmigen, innenbeschichteten Membranmodulen zur Wasserfiltration, wobei die möglichen Betriebsarten die frontale Filtration, die tangentiale Filtration mit Rezirkulation in einer Schleife und die tangentiale Filtration mit kontinuierlicher Ableitung sind, dadurch gekennzeichnet, daß zwei Arten der Auslösung der Rückspülungen der Filtrationsmembranen vorgesehen werden, von denen die erste mit für jede Filtrationsart vorgegebenen Zeitabständen zwischen zwei Rückspülungen und die zweite mit für jede Filtrationsart vorgegebenen Vorgabewerten eines Betriebsparameters der automatischen Vorrichtung verknüpft ist, und zwar einem Parameter, der mit der Qualität des zu behandelnden Wassers verknüpft ist, und daß man von der einen zu der anderen Filtrationsart übergeht, nachdem wenigstens eine Rückspülung durch Erreichen eines Vorgabewertes anstatt durch Ablauf eines vorbestimmten Zeitabstandes ausgelöst wurde, wobei der Übergang in der Reihenfolge: frontale Filtration, tangentiale Filtration, tangentiale Filtration mit kontinuierlicher Ableitung vorgenommen wird, oder in umgekehrter Reihenfolge, wenn zwei oder mehr aufeinanderfolgende Rückspülungen bei Ablauf eines vorbestimmten Zeitabstands anstatt durch Erreichen eines Vorgabewertes ausgelöst wurden.

2. Verfahren nach Anspruch 1, dadurch gekennzeichnet, daß der Übergang von der Betriebsart frontale Filtration zur Betriebsart tangentiale Filtration erfolgt, nachdem eine Rückspülung zweimal durch Erreichen eines ersten Vorgabewertes ausgelöst wurde, und daß der Übergang von der Betriebsart tangentiale Filtration zur Betriebsart tangentiale Filtration mit kontinuierlicher Ableitung durch Öffnen eines Spülventils erfolgt, wenn das Zeitintervall zwischen zwei durch Erreichen eines zweiten Vorgabewertes ausgelösten Rückspülungen kleiner ist als ein vorgegebener Zeitabstand, der selbst kleiner als die für die ersten Arten der Auslösung von Rückspülungen vorbestimmten Zeitabstände ist.

3. Verfahren nach Anspruch 2, dadurch gekennzeichnet, daß man von der Betriebsart tangentiale Filtration mit Ableitung zur Betriebsart tangentiale Filtration übergeht, wenn n aufeillanderfolgende Rückspülungen jeweils nach Ablauf der für die tangentiale Filtration vorgegebenen Zeitspanne ausgelöst worden sind, und daß man von der Betriebsart tangentiale Filtration zur Betriebsart frontale Filtration übergeht, wenn m aufeinanderfolgende Rückspülungen jeweils nach Ablauf der für die tangentiale Filtration vorgesehenen Zeitspanne ausgelöst worden sind, wobei m > n ist.

4. Verfahren nach einem der Ansprüche 1 - 3, dadurch gekennzeichnet, daß der Vorgabewert oder die Vorgabewerte die Drücke am Einlaß der Module sind, die den maximalen Druckdifferenzen an der Membran bei frontaler und tangentialer Filtration entsprechen.

5. Verfahren nach einem der Ansprüche 1 - 4, dadurch gekennzeichnet, daß nach Außerbetriebsetzen der Module eine Rückspülung vorgenommen wird und das Wiederanfahren der Module in der Betriebsart frontale Filtration erfolgt.

## Claims

1. A method of changing operating modes in water filtering apparatus comprising inside-skin tubular membrane modules for filtering water, the possible filtering modes being: dead-end filtering; cross-flow filtering accompanied by recirculation in a loop; and cross-flow filtering accompanied by continuous purging; the method being characterized in that two types of triggering are provided for filter membrane backwashes, the first type being related to time periods between two backwashes, which time periods are predetermined for each mode of filtering, and the second type being related to reference values of an operating parameter of the automatic apparatus, the parameter being related to the quality of water to be treated; and switching from one mode of filtering to another after at least one backwash has been triggered by reacting to one of the reference values instead of at the end of a predetermined time period, with switching taking place in the following order: dead-end filtering, cross-flow filtering, cross-flow filtering with continuous purging, or <u>vice versa</u> if two or more consecutive backwashes have been triggered at the end of a predetermined time period instead of being triggered by reaching a reference value.

2. A method according to claim 1, characterized in that switching from dead-end filtering mode to cross-flow filtering mode is performed after a backwash has been triggered twice by reaching a first reference value, and that switching from cross-flow filtering mode to cross-flow filtering mode with continuous purging is performed after the time interval between two backwashes triggered by reaching a second reference value has become less than a predetermined time period, which is itself less than the predetermined time period for the first types of backwash triggering.

3. A method according to claim 2, characterized in that switching from cross-flow filtering mode with purging to cross-flow filtering mode without purging takes place when $\underline{n}$ consecutive backwashes have been triggered by reaching the end of the time period predetermined for cross-flow filtering, and switching from cross-flow filtering mode to dead-end filtering mode takes place when $\underline{m}$ consecutive backwashes have been triggered by reaching the end of the time period predetermined for cross-flow filtering, with m > n.

4. A method according to any one of claims 1 to 3, characterized in that the reference value(s) is/are inlet pressures to the modules corresponding to maximum transmembrane pressures in dead-end filtering and in cross-flow filtering.

5. A method according to any one of claims 1 to 4, characterized in that after the operation of the modules has been stopped, backwashing is performed and the modules are restarted in dead-end filtering mode.